# FASCICULE DE BREVET EUROPEEN

(11) **EP 3 559 434 B1**
(45) Date de publication et mention de la délivrance du brevet: **28.10.2020**
(21) Numéro de dépôt: 17828984.9
(22) Date de dépôt: 20.12.2017
(51) Int. Cl.: F02K 1/60

(54) **NACELLE DE TURBORÉACTEUR D'AÉRONEF**
TRIEBWERKSGONDEL EINES FLUGZEUGS
AIRCRAFT JET ENGINE NACELLE

(30) Priorité: 20.12.2016 FR 1662940
(43) Date de publication de la demande: 30.10.2019
(73) Titulaire: Safran Nacelles, 76700 Gonfreville-l'Orcher (FR)
(72) Inventeur: GUILLOIS, Denis, 76700 Gonfreville L'orcher (FR)
(74) Mandataire: Delorme, Nicolas
(86) Numéro de dépôt international: PCT/FR2017/053722
(87) Numéro de publication internationale: WO 2018/115731

(56) Documents cités:
- GB-A- 2 188 886
- US-A- 3 837 578
- US-A- 4 462 207
- US-A1- 2009 127 390

## Description

L'invention se rapporte à une nacelle de turboréacteur équipée d'un inverseur de poussée à portes arrière, à un ensemble propulsif d'aéronef et à un aéronef comportant une nacelle.

La présente invention concerne plus précisément une nacelle pour turboréacteur du type à double flux, c'est-à-dire équipé d'une soufflante située en amont du moteur et assurant la circulation d'un flux d'air froid dans un canal annulaire dénommé veine secondaire et entourant le générateur de gaz. La présente invention concerne plus particulièrement une nacelle pour turboréacteur du type précité dans lequel le flux d'air froid (ou flux secondaire) et le flux de gaz chauds (ou flux primaire) se rejoignent dans un passage aval de section sensiblement circulaire avant d'être éjectés ensemble.

De façon plus spécifique, l'invention concerne une nacelle pour turboréacteur à double flux selon la revendication 1, la nacelle incorporant un système d'inverseur de poussée comportant deux portes présentant chacune un bord amont et un bord aval, par référence au sens d'écoulement des gaz, lesdites portes étant disposées à l'aval de la nacelle et étant chacune montée pivotante autour d'axes d'articulation entre une position escamotée (n'interférant pas avec l'éjection des gaz en jet direct), et une position déployée (provoquant l'inversion de poussée) dans laquelle lesdites portes assurent la redirection vers l'avant des flux primaire et secondaire.

On connaît déjà, notamment par la demande WO 98/55754, un ensemble d'inversion de ce type. Ce type d'inverseur équipe généralement des nacelles de turboréacteurs de petite dimension, comme par exemple ceux montés sur le fuselage des avions d'affaires. Dans une telle configuration, lors des phases de déploiement des inverseurs de poussée, la poussée générée vers l'avant par les turboréacteurs, du fait de la position de ceux-ci, induit un moment de tangage à cabrer. Ainsi, l'action des inverseurs de poussée tend à lever le nez de l'avion, ce qui est bien sûr néfaste au bon contrôle de celui-ci. Il est donc nécessaire de prévoir une configuration telle que la poussée des turboréacteurs en phase d'inversion de poussée génère un moment à piquer et non un moment à cabrer.

Une solution à ce problème est connue du document US 8,051,639. La solution proposée dans ce document consiste à prévoir des portes d'inverseur décalées selon l'axe longitudinal du moteur en position déployée, laissant échapper vers l'arrière et vers le bas une portion du flux de gaz provenant du moteur. Cette portion génère ainsi une poussée dirigée vers l'arrière de l'appareil et vers le sol, induisant ainsi un moment à piquer, puisque cette poussée est générée en un point situé en arrière du centre de gravité de l'avion.

Cette solution présente toutefois l'inconvénient que la poussée générant ce moment à piquer est également dirigée vers l'arrière, diminuant ainsi l'efficacité globale de l'inverseur de poussée. En outre, la position décalée (selon l'axe longitudinal du moteur) des portes d'inverseur constitue une architecture complexe, qui rend difficile la conception d'un tel ensemble. Enfin, une telle configuration peut dégrader les qualités aérodynamiques de l'ensemble lorsque les portes de l'inverseur de poussée sont en position déployée.

La présente invention a pour but de remédier aux inconvénients de l'état de la technique exposés ci-dessus.

Elle concerne à cet effet une nacelle de turboréacteur d'aéronef à double flux, comportant une section arrière un dispositif d'inversion de poussée, le système d'inversion de poussée comportant une porte supérieure et une porte inférieure, les portes étant mobiles en rotation entre une position escamotée, dans laquelle elles assurent une continuité aérodynamique avec le reste de la section arrière, et une position déployée, dans laquelle les portes sont aptes à rediriger vers l'avant les flux primaire et secondaire générés par le turboréacteur, chaque porte étant déplacée d'une position à l'autre par au moins un actionneur dédié, l'angle d'ouverture de la porte supérieure en position déployée étant inférieur à l'angle d'ouverture de la porte inférieure.

Ainsi, en prévoyant un angle d'ouverture plus important pour la porte inférieure que pour la porte supérieure, la somme des contrepoussées générées par les deux portes comporte une composante verticale dirigée vers le bas. Lors des phases d'inversion de poussée, cette composante verticale induit sur l'ensemble propulsif une force dirigée vers le haut qui, lorsque l'ensemble propulsif est situé à l'arrière du fuselage d'un avion, génère un moment de tangage à piquer. De plus, l'ouverture différenciée des deux portes peut être obtenue simplement par une course différenciée des actionneurs respectivement dédiés à chaque porte. Cette ouverture différenciée est ainsi obtenue de manière simple et fiable, et dans tous les cas sans occasionner de perte d'efficacité du dispositif d'inversion de poussée. Par ailleurs, le positionnement symétrique des portes (par rapport à un plan contenant l'axe longitudinal du moteur), constitue une architecture plus simple et présentant de meilleures qualités aérodynamiques lorsque les portes sont en position déployée (même si leur ouverture est asymétrique).

Dans une réalisation, la course de l'actionneur supérieur, actionnant la porte supérieure, est inférieure à la course de l'actionneur inférieur, actionnant la porte inférieure.

Dans une réalisation, la différence d'angle d'ouverture entre les portes inférieure et supérieure est compris entre 3° et 10°.

Dans une réalisation, la différence d'angle d'ouverture entre les portes inférieure et supérieure est compris entre 4° et 6°.

Dans une réalisation, les portes inférieure et supérieure sont mobiles en rotation autour d'axes respectifs, ces axes de rotation étant symétriques par rapport à l'axe longitudinal de la nacelle.

L'invention concerne également un ensemble propulsif d'aéronef, comportant un turboréacteur à double flux, l'ensemble propulsif comportant une nacelle telle que définie ci-dessus.

L'invention se rapporte enfin à un aéronef comportant au moins un ensemble propulsif tel que défini ci-dessus, l'ensemble propulsif étant attaché au fuselage de l'aéronef, en position arrière par rapport au centre de gravité de l'aéronef.

La présente invention sera mieux comprise à la lecture de la description détaillée qui suit, faite en référence aux dessins annexés, parmi lesquels :
- la figure 1 est une vue en coupe d'un ensemble propulsif équipé d'une nacelle conforme à l'invention, la porte supérieure de l'inverseur de poussée étant représentée en configuration de « jet direct », la porte inférieure étant représentée en configuration de « jet inverse » ;
- les figures 2a et 2b représentent une vue partielle en perspective de la nacelle de la figure 1, montrant la section arrière avec le système d'inversion de poussée respectivement en position rétractée et déployée ;
- les figures 3a et 3b sont respectivement des vues de côté des figures 2a et 2b.

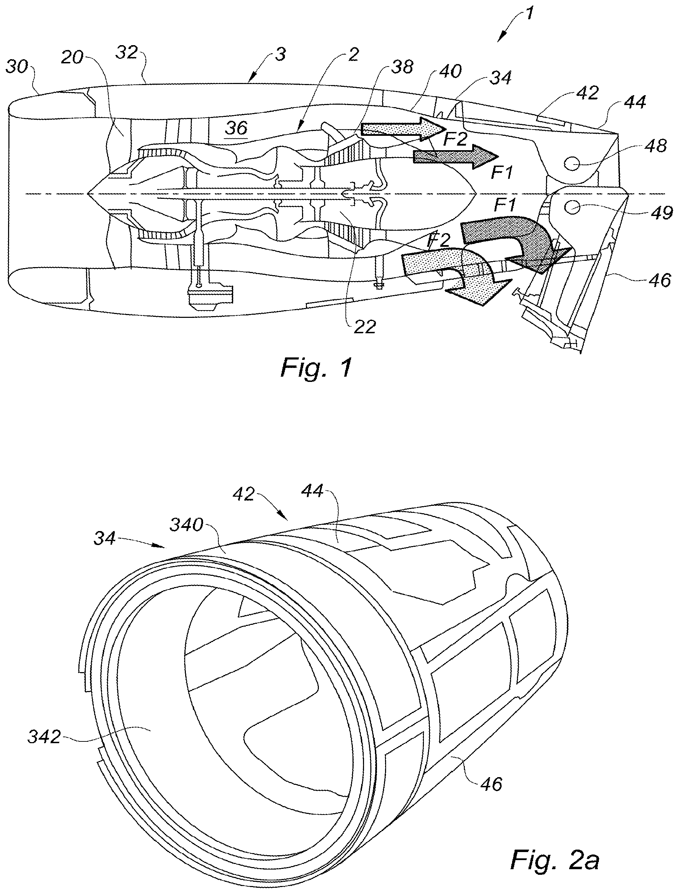

La figure 1 montre un ensemble propulsif 1 conforme à l'invention, prévu pour être disposé sur le fuselage d'un avion, à l'arrière de celui-ci. L'ensemble propulsif 1 comporte un turboréacteur 2 à double flux équipé d'une nacelle 3. La nacelle 3 comporte, de manière conventionnelle, une entrée d'air 30, une section médiane 32 (entourant notamment une soufflante 20 du turboréacteur 2), ainsi qu'une section arrière 34. Comme montré sur la figure 1, le turboréacteur 2 est apte à générer, par l'intermédiaire du générateur de gaz 22, un flux de gaz chauds F1, appelé flux primaire, et, par l'intermédiaire de la soufflante 20 un flux d'air froid F2, appelé flux secondaire, qui circule à l'extérieur du turboréacteur 2, à travers un canal annulaire appelé veine secondaire 36. La veine secondaire 36 est délimitée entre une structure fixe interne 38 et une structure fixe externe 40 de la nacelle 3. Les deux flux d'air F1 et F2 sont éjectés de l'ensemble propulsif 1 par l'arrière de la nacelle.

La section arrière 34 intègre un dispositif d'inversion de poussée 42 et est terminée par une tuyère d'éjection dont la sortie est située en aval du turboréacteur. Le dispositif d'inversion de poussée 42 comprend deux portes, une porte supérieure 44 et une porte inférieure 46, montées pivotantes de manière à pouvoir, sous l'action de moyens d'entraînement, basculer entre une position escamotée correspondant à une configuration de jet direct, et une position déployée, correspondant à une configuration de jet inverse. Dans la position escamotée (position dans laquelle est représentée la porte supérieure 44), les portes 44, 46 assurent, avec une structure fixe de la section arrière 34, une continuité aérodynamique avec le reste de la nacelle. Dans la position déployée (position dans laquelle est représentée la porte inférieure 46), les portes 44, 46 sont déployées de manière à ce que chaque porte obstrue au moins partiellement la tuyère d'éjection de l'ensemble propulsif, redirigeant ainsi vers l'avant les flux primaire F1 et secondaire F2. Le passage des portes 44, 46 d'une position à une autre s'effectue par rotation autour d'un axe de rotation respectif 48, 49, les axes de rotation 48, 49 étant symétriques par rapport à l'axe longitudinal du moteur.

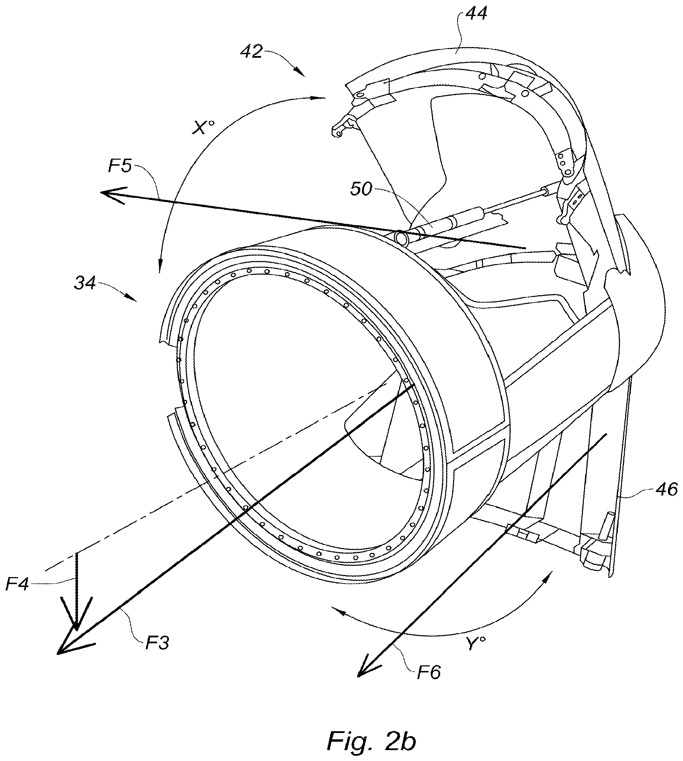

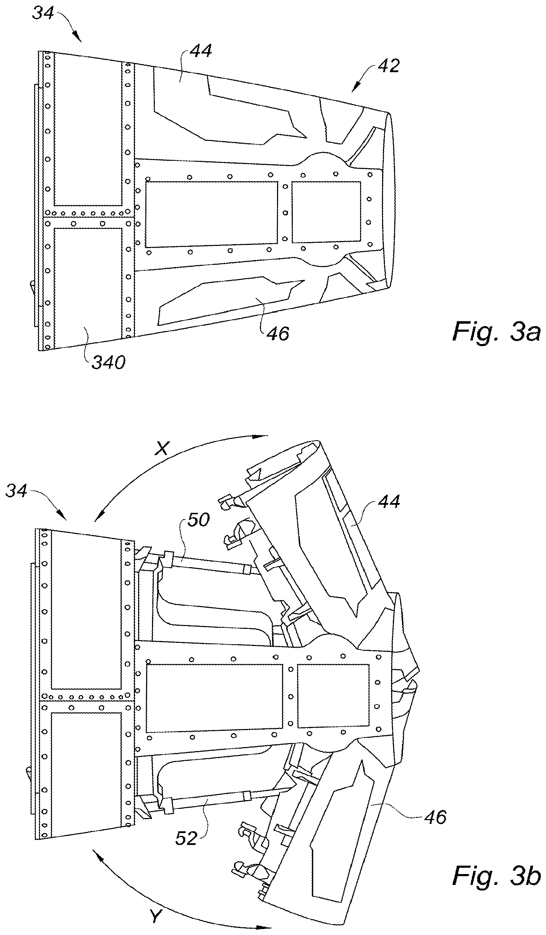

Les figures 2a et 2b sont des vues en perspective de la section arrière 34 de la nacelle 3, le dispositif d'inversion de poussée 42 étant respectivement en position escamotée et en position déployée. Les figures 3a et 3b sont des vues de côté correspondant aux figures 2a et 2b.

Les figures 2a et 3a montrent ainsi les portes supérieure 44 et inférieure 46 dans leur position escamotée, position dans laquelle elles assurent une continuité aérodynamique avec le reste de la section arrière 34, vis-à-vis de la surface externe 340 et vis-à-vis de la surface interne 342 de celle-ci. Comme visible plus particulièrement sur la figure 3a, les portes sont symétriques par rapport à un plan contenant l'axe longitudinal de la nacelle.

Les figures 2b et 3b montrent quant à elles le dispositif d'inversion de poussée 42 dans sa position déployée. On voit donc que les portes 44, 46 ont pivoté, actionnées chacune par un vérin 50, 52 dédié, et sont dans une position dans laquelle elles redirigent vers l'avant les flux de gaz provenant du turboréacteur (flux chaud, ou primaire, et flux froid, ou secondaire). Comme visible plus particulièrement sur la figure 3b, du fait du positionnement symétrique des axes de rotation 48, 49 des portes 44, 46, les bords arrières (ou avals) des portes 44, 46 ne sont pas décalés selon l'axe longitudinal de la nacelle lorsque les portes sont en position déployée.

Conformément à l'invention, l'angle d'ouverture X de la porte supérieure 44 (c'est-à-dire l'angle entre les positions escamotée et déployée) est inférieure à l'angle d'ouverture Y de la porte inférieure 46. Ainsi, la portion de flux de gaz redirigé vers le bas (et donc la poussée induite vers le bas) par la porte inférieure 46 et plus importante que la portion de flux de gaz redirigé vers le haut (et donc la poussée induite vers le haut) par la porte supérieure 44. Comme montré sur la figure 2b, la somme des poussées générées par les portes 44, 46 dans leur position déployée (matérialisée par la flèche F3, les poussées générées au niveau de chaque porte étant respectivement matérialisées par les flèches F5 et F6) intègre une composante verticale dirigée vers le bas (matérialisée par la flèche F4). Grâce à cette composante verticale, une force dirigée vers le haut s'applique sur l'ensemble propulsif dans les phases d'inversion de poussée. Ainsi, lorsque l'ensemble propulsif 1 est situé à l'arrière du fuselage d'un avion, en arrière du centre de gravité de l'avion, cette force dirigée vers le haut génère sur l'avion un moment de tangage à piquer.

Comme précisé plus haut, la porte supérieure 44 est actionnée par un actionneur supérieur 50, la porte inférieure 46 étant actionnée par un actionneur inférieur 52. Comme visible plus particulièrement sur la figure 3b, l'ouverture différenciée des portes 44, 46 est obtenue dans l'exemple par une course différenciée des deux actionneurs 50, 52. Ainsi, l'actionneur inférieur 52 présente une course plus longue que l'actionneur supérieur 50. La différence de course sera bien entendu prévu afin d'obtenir la différence voulue entre les angles Y et X. Dans l'exemple, la différence d'angle d'ouverture entre les portes 44, 46 est comprise entre 3° et 10°, de préférence entre 4° et 6°. La course de l'actionneur inférieur 52 étant supérieure à celle de l'actionneur supérieur 50, on pourra envisager que le premier soit commandé pour générer une vitesse de déploiement (et/ou de rétraction) plus importante que celle du deuxième. Par ailleurs, la disposition des actionneurs 50, 52 est, lorsque les portes sont en position escamotée, symétrique (par rapport à un plan contenant l'axe longitudinal du moteur). On pourra toutefois envisager un positionnement asymétrique des actionneurs, auquel cas la course des deux actionneurs ne sera pas nécessairement différenciée.

## Revendications

1. Nacelle (3) de turboréacteur d'aéronef à double flux, comportant une section arrière (34) intégrant un dispositif d'inversion de poussée (42), le dispositif d'inversion de poussée (42) comportant une porte supérieure (44) et une porte inférieure (46), les portes étant mobiles en rotation entre une position escamotée, dans laquelle elles assurent une continuité aérodynamique avec le reste de la section arrière (34), et une position déployée, dans laquelle les portes (44, 46) sont aptes à rediriger vers l'avant les flux primaire et secondaire générés par le turboréacteur, chaque porte (44, 46) étant déplacée d'une position à l'autre par au moins un actionneur (50, 52) dédié, l'angle d'ouverture (X) de la porte supérieure (44) en position déployée étant inférieur à l'angle d'ouverture (Y) de la porte inférieure (46) de sorte que la somme des contrepoussées générées par les deux portes (44, 46) comporte une composante verticale dirigée vers le bas, les portes inférieure (46) et supérieure (44) étant mobiles en rotation autour d'axes respectifs (48, 49), ces axes de rotation étant symétriques par rapport à l'axe longitudinal de la nacelle (3).

2. Nacelle selon la revendication 1, dans laquelle la course de l'actionneur supérieur (50), actionnant la porte supérieure (44), est inférieure à la course de l'actionneur inférieur (52), actionnant la porte inférieure (46).

3. Nacelle selon la revendication 1 ou 2, dans laquelle la différence d'angle d'ouverture entre les portes inférieure (46) et supérieure (44) est compris entre 3° et 10°.

4. Nacelle selon la revendication précédente, dans laquelle la différence d'angle d'ouverture entre les portes inférieure (46) et supérieure (44) est compris entre 4° et 6°.

5. Ensemble propulsif d'aéronef (1), comportant un turboréacteur (2) à double flux et une nacelle (3) conforme à l'une des revendications précédentes.

6. Aéronef comportant au moins un ensemble propulsif conforme à la revendication 5, l'ensemble propulsif étant attaché au fuselage de l'aéronef, en position arrière par rapport au centre de gravité de l'aéronef.

## Patentansprüche

1. Gondel (3) eines Zweikreis-Turbostrahltriebwerks eines Flugzeugs, umfassend einen hinteren Abschnitt (34), in dem eine Schubumkehrvorrichtung (42) integriert ist, wobei die Schubumkehrvorrichtung (42) eine obere Tür (44) und eine untere Tür (46) umfasst, wobei die Türen drehbar sind zwischen einer eingefahrenen Position, in der sie eine aerodynamische Kontinuität mit dem Rest des hinteren Abschnitts (34) sichern, und einer ausgefahrenen Position, in der die Türen (44, 46) imstande sind, die primären und sekundären Ströme, die von dem Turbostrahltriebwerk erzeugt werden, nach vorne umzuleiten, wobei jede Tür (44, 46) von mindestens einem entsprechenden Aktor (50, 52) von einer Position in die andere verschoben wird, wobei der Öffnungswinkel (X) der oberen Tür (44) in ausgefahrener Position kleiner ist als der Öffnungswinkel (Y) der unteren Tür (46), sodass die Summe der Gegenschübe, die von den zwei Türen (44, 46) erzeugt werden, eine nach unten gerichtete Vertikalkomponente umfasst, wobei die untere (46) und obere (44) Tür um jeweilige Achsen (48, 49) drehbar sind, wobei diese Drehachsen in Bezug auf die Längsachse der Gondel (3) symmetrisch sind.

2. Gondel nach Anspruch 1, wobei der Hub des oberen Aktors (50), der die obere Tür (44) betätigt, kleiner ist als der Hub des unteren Aktors (52), der die untere Tür (46) betätigt.

3. Gondel nach Anspruch 1 oder 2, wobei die Differenz des Öffnungswinkels zwischen der unteren (46) und oberen (44) Tür zwischen 3° und 10° beträgt.

4. Gondel nach dem vorstehenden Anspruch, wobei die Differenz des Öffnungswinkels zwischen der unteren (46) und oberen (44) Tür zwischen 4° und 6° beträgt.

5. Antriebseinheit eines Flugzeugs (1), umfassend ein Zweikreis-Turbostrahltriebwerk (2) und eine Gondel (3) nach einem der vorstehenden Ansprüche.

6. Flugzeug, umfassend mindestens eine Antriebseinheit nach Anspruch 5, wobei die Antriebseinheit am Rumpf des Flugzeugs in hinterer Position in Bezug auf den Schwerpunkt des Flugzeugs befestigt ist.

## Claims

1. A nacelle (3) for an aircraft bypass turbojet engine including a rear section (34) comprising a thrust reverser device (42), the thrust reverser device (42) including an upper door (44) and a lower door (46), the doors being movable in rotation between a stowed position, in which they ensure an aerodynamic continuity with the rest of the rear section (34), and a deployed position, in which the doors (44, 46) are capable of redirecting forward the primary and secondary flows generated by the turbojet engine, each door (44, 46) being displaced from one position to the other by at least one dedicated actuator (50, 52), the opening angle (X) of the upper door (44) in the deployed position being less than the opening angle (Y) of the lower door (46) so that the sum of the counter-thrusts generated by both doors (44, 46) includes a vertical component directed downward, the lower (46) and upper (44) doors being movable in rotation about respective axes (48, 49), these axes of rotation being symmetrical relative to the longitudinal axis of the nacelle (3).

2. The nacelle according to claim 1, wherein the stroke of the upper actuator (50), actuating the upper door (44), is smaller than the stroke of the lower actuator (52), actuating the lower door (46).

3. The nacelle according to claim 1 or 2, wherein the difference in opening angle between the lower (46) and upper (44) doors is comprised between 3° and 10°.

4. The nacelle according to the preceding claim, wherein the difference in opening angle between the lower (46) and upper (44) doors is comprised between 4° and 6°.

5. An aircraft propulsion unit (1), including a bypass turbojet engine (2) and a nacelle (3) according to any of the preceding claims.

6. An aircraft including at least one propulsion unit according to claim 5, the propulsion unit being attached to the fuselage of the aircraft, in the rear position relative to the center of gravity of the aircraft.
